(19) **Europäisches Patentamt**

**European Patent Office**

**Office européen des brevets**

(11) **EP 1 335 303 A1**

(12) **EUROPÄISCHE PATENTANMELDUNG**

(43) Veröffentlichungstag:
**13.08.2003 Patentblatt 2003/33**

(51) Int Cl.7: **G06F 17/30**

(21) Anmeldenummer: **02003058.1**

(22) Anmeldetag: **12.02.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder:
• **Brantsch, Johann**
**39022 Algund (BZ) (IT)**
• **Plunger, Kurt**
**39040 Seis (BZ) (IT)**

(72) Erfinder:
• **Brantsch, Johann**
**39022 Algund (IT)**
• **Zöschg, Udo**
**39016 St. Walburg/Ulten (IT)**

(74) Vertreter: **Dendorfer, Claus, Dr.**
**Wächtershäuser & Hartz**
**Tal 29**
**80331 München (DE)**

(54) **Anbindung eines Clienten an einer Datenbank**

(57) Bei einem Verfahren zur Anbindung eines Client (14) an eine Datenbank (18) über einen Server (12), wobei der Client (14) und der Server (12) über ein Kommunikationsnetz (16) Daten auszutauschen vermögen, und wobei der Client (14) einen Datenspeicher (30) zur Speicherung von Datensätzen und eine Anzeige (24) zur Darstellung von im Datenspeicher (30) vorhandenen Datensätzen aufweist, werden nach einem ersten Aspekt der Erfindung zur Minimierung der Anzahl der Übertragungsvorgänge bei der Kommunikation vom Server (12) zum Client (14) bei zumindest manchen Übertragungsvorgängen Datensätze an den Client (14) übertragen, die gegenwärtig nicht zur Darstellung auf der Anzeige (24) benötigt werden. Nach einem zweiten Aspekt der Erfindung werden von einem Benutzer vorgenommene Änderungen mehrerer im Datenspeicher (30) enthaltener Datensätze durch den Client (14) ohne Kommunikation mit dem Server (12) verwaltet, so daß bei der Darstellung zumindest der im Datenspeicher (30) enthaltenen Datensätze auf der Anzeige (24) die vorgenommenen Änderungen berücksichtigt werden. Durch die Erfindung wird die Benutzerfreundlichkeit bei der Bedienung des Client erhöht, indem typische Reaktionszeiten des Systems bzw. Wartezeiten des Benutzers verringert werden.

Fig. 1

**Beschreibung**

Die Erfindung betrifft allgemein das technische Gebiet der Anbindung eines Client an einen Server, der seinerseits Zugriff auf eine Datenbank hat. Spezieller betrifft die Erfindung solche Client-Server-Systeme, bei denen der Client über ein Weitverkehrsnetz mit geringem Datendurchsatz an den Server angebunden ist. Noch spezieller betrifft die Erfindung das Gebiet, einen auf dem Server gehaltenen Datenbestand durch den Client zu verwalten, also auf die Daten zuzugreifen und sie gegebenenfalls zu ändern. Ein typisches Anwendungsgebiet der Erfindung sind betriebliche Informationssysteme, bei denen z.B. ein Vertriebsmitarbeiter mittels eines Handheld-Computers über eine Mobiltelefonschnittstelle Preislisten vom Server abrufen und Bestellungen an den Server weitergeben kann.

Die Verwendung von mobilen Geräten zum Zugriff auf eine serverseitige Datenbank ist an sich bekannt. Allerdings leiden bekannte Systeme meist unter langen Reaktionszeiten, die das Arbeiten mit dem System erschweren und störende Wartezeiten sowohl bei der Navigation des Benutzers durch den verwalteten Datenbestand als auch bei der clientseitigen Eingabe von Änderungen bedingen. Dies gilt insbesondere dann, wenn der mobile Client über ein übliches, funkbasiertes Telekommunikationsnetz (z.B. das GSM-Netz) an den Server angebunden ist.

Die Erfindung hat die Aufgabe, die Benutzerfreundlichkeit bei der Bedienung des Client zu erhöhen, indem typische Reaktionszeiten des Systems bzw. Wartezeiten des Benutzers verringert werden. Dies betrifft insbesondere Wartezeiten, die auftreten, wenn der Benutzer durch den Datenbestand navigiert und/oder Änderungen des Datenbestandes eingibt.

Erfindungsgemäß wird diese Aufgabe durch Verfahren mit den Merkmalen des Anspruchs 1 bzw. des Anspruchs 5, durch einen Server gemäß Anspruch 11, einen Client gemäß Anspruch 12 und ein Computerprogrammprodukt gemäß Anspruch 13 gelöst. Die abhängigen Ansprüche definieren bevorzugte Ausgestaltungen der Erfindung. Eine weitere bevorzugte Ausgestaltung ist ein Verfahren, das die Merkmale sowohl von Anspruch 1 als auch von Anspruch 5 aufweist.

Die Erfindung geht von der Überlegung aus, daß bei für den vorliegenden Anwendungsfall typischen Kommunikationsnetzen die Übermittlung eines Datenpakets zusätzlich zu der Zeit für die eigentliche Datenübertragung auch eine gewisse, von der Paketgröße weitgehend unabhängige Paketlaufzeit benötigt. Erfindungsgemäß wird daher angestrebt, die Anzahl der zu übermittelnden Datenpakete bzw. die Anzahl der Übertragungsvorgänge zu minimieren.

Zur Minimierung der Anzahl der Übertragungsvorgänge zum Client wird hierbei nach einem ersten Aspekt der Erfindung in Kauf genommen, daß in gewissem Umfang auch Daten übertragen werden, die nicht oder noch nicht benötigt werden. Hinsichtlich der Übertragungsvorgänge zum Server wird nach einem zweiten Aspekt der Erfindung ein gewisser zusätzlicher Verarbeitungs- und Speicheraufwand in Kauf genommen, um zu bewirken, daß Änderungen mehrerer Datensätze durch den Benutzer zunächst clientlokal ohne Kommunikation mit dem Server verwaltet werden. Solche clientlokal verwalteten Änderungen werden jedoch zumindest bei der Darstellung der im Datenspeicher des Client enthaltenen Datensätze berücksichtigt.

Das erfindungsgemäße System reagiert schnell auf Navigations- und/oder Änderungskommandos des Benutzers. Dies erlaubt ein angenehmes und effizientes Arbeiten, auch wenn der Client nur über ein übliches und somit kostengünstiges Kommunikationsnetz an den Server angebunden ist. Eine clientseitige Datenbank, die Sicherheitsprobleme aufwirft und in aufwendiger Weise mit einer zentralen Datenbank synchronisiert werden müßte, ist nicht erforderlich.

In bevorzugten Ausgestaltungen der Erfindung wird in einem lokalen Datenspeicher des Client eine erste Anzahl von Datensätzen gespeichert. Zu jedem Zeitpunkt wird nur eine zweite, geringere Anzahl dieser Datensätze auf einer Anzeige des Client dargestellt. Das Verhältnis der ersten zur zweiten Anzahl beträgt im Regelbetrieb des Systems vorzugsweise mindestens 1,2 oder 1,5 oder 1,8 und höchstens 3 oder 5 oder 10 oder 20. Dies stellt einen ausgewogenen Kompromiß zwischen der Minimierung der Anzahl der Übertragungsvorgänge und einer sinnvollen Beschränkung des übertragenen Datenvolumens dar. Bevorzugt hängt dieses Verhältnis dynamisch von der Position der auf der Anzeige dargestellten Datensätze und/oder eines ausgewählten Datensatzes innerhalb eines Datenbestandes ab. So kann zum Beispiel bei einer Position des ausgewählten Datensatzes nahe der Grenzen des Datenbestandes ein Verhältnis von ungefähr 1,5 bis 2,5 und bei einer Position des ausgewählten Datensatzes in der Mitte des Datenbestandes ein Verhältnis von ungefähr 2,5 bis 3,5 gewählt werden.

Bevorzugt weist der Client Bedienelemente (z.B. reale oder virtuelle Tasten oder Navigationsleisten) zur Steuerung der Navigation durch den Datenbestand auf. Solange die auf der Anzeige des Client darzustellenden Datensätze lokal im Datenspeicher des Client enthalten sind, findet vorzugsweise keine Kommunikation des Client mit dem Server statt. Müssen dagegen Datensätze vom Server nachgeladen werden, so werden bevorzugt in einem einzigen Übertragungsvorgang mehrere Datensätze, von denen manche nicht oder noch nicht zur Darstellung auf der Anzeige benötigt werden, zum Client übertragen.

Die vom Benutzer vorgenommenen Änderungen, die gemäß dem zweiten Aspekt der Erfindung zunächst clientlokal verwaltet und/oder protokolliert werden, werden in bevorzugten Ausgestaltungen auch nach der Ausführung von Navigationsvorgängen, bei denen Datensätze in den Client nachgeladen wurden, weiterhin berücksichtigt. Die Änderungen werden vorzugsweise erst in Reaktion auf eine vom Benutzer veranlaßte Bestätigung an den Server übertragen, um in die Datenbank übernommen zu werden. Bevorzugt werden hierbei in einem einzigen Übertragungsvorgang sämtliche Informationen an den Server übermittelt, die zum Eintrag mehrerer solcher Änderungen in die Datenbank erforderlich sind. Vor dieser Bestätigung sind alle vom Benutzer clientseitig vorgenommenen Änderungen vorzugsweise ohne Kommunikation des Client mit dem Server widerrufbar. Bevorzugt kann eine derartige clientseitige Änderung die inhaltliche Änderung eines Datensatzes und/oder das Einfügen eines neuen Datensatzes und/oder das Löschen eines bestehenden Datensatzes sein.

Der erfindungsgemäße Server, der erfindungsgemäße Client und das erfindungsgemäße Computerprogrammprodukt sind vorzugsweise mit Merkmalen weitergebildet, die den oben beschriebenen und/oder in den Verfahrensansprüchen definierten Merkmalen entsprechen. Als "Computerprogrammprodukt" im hier verwendeten Sinne sollen sowohl körperliche Datenträger mit Programmbefehlen (z.B. Disketten, CD-ROMs, Festplatten, ...) als auch nicht-körperliche Signale zur Informationsübertragung angesehen werden.

Weitere Merkmale, Vorteile und Aufgaben der Erfindung gehen aus der folgenden detaillierten Beschreibung eines Ausführungsbeispiels und mehrerer Ausführungsalternativen hervor. Es wird auf die schematischen Zeichnungen verwiesen, in denen zeigen:

Fig. 1 eine Blockdarstellung des Gesamtsystems mit Client, Server und DBMS in einem Ausführungsbeispiel der Erfindung,

Fig. 2 eine beispielhafte Darstellung eines modellkonformen Datenbestandes und eines Client-Datenbestandes in dem Ausführungsbeispiel von Fig. 1,

Fig. 3 und Fig. 4 je eine beispielhafte Darstellung des Anzeigeinhalts des Client bei der Bearbeitung von Kundendaten bzw. Auftragsdaten, und

Fig. 5 eine Darstellung zweier Kommunikationsvorgänge zwischen dem Client und dem Server.

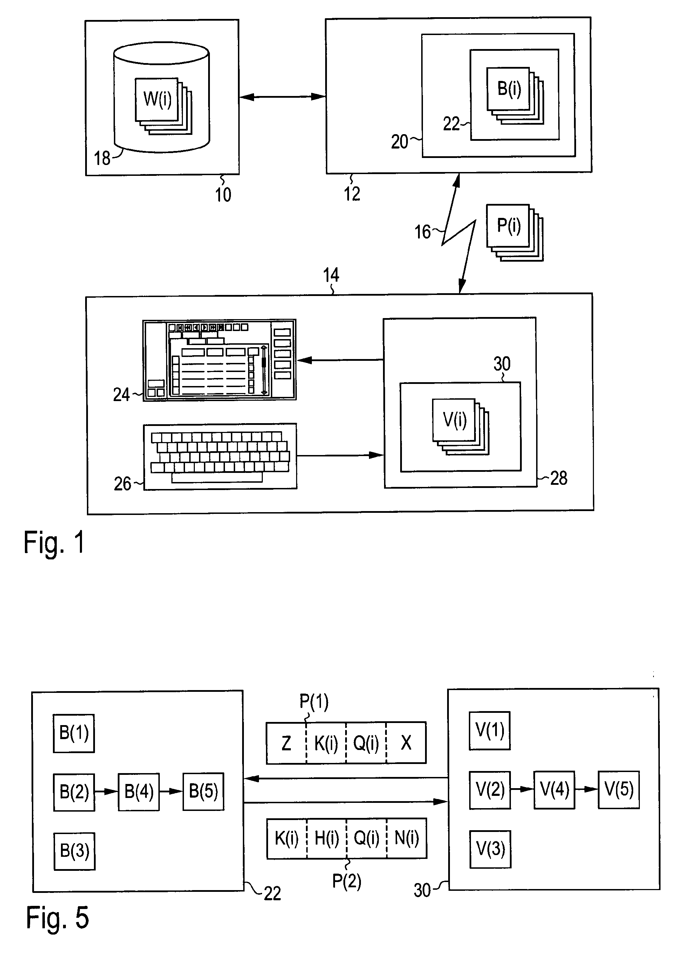

Das in Fig. 1 gezeigte Gesamtsystem weist ein DBMS 10 (DBMS = *database management system* = Datenbankverwaltungssystem), einen Server 12 und einen Client 14 auf. Der Server 12 und der Client 14 vermögen über ein drahtloses Kommunikationsnetz 16 Daten auszutauschen. Als Kommunikationsvorgänge finden dabei insbesondere das Übermitteln einer Anfrage (*request*) des Client 14 an den Server 12 und das Übermitteln einer Antwort (*response*) des Server 12 an den Client 14 statt. An den Server 12 können neben dem Client 14 weitere Rechner (in Fig. 1 nicht gezeigt) über das Kommunikationsnetz 16 oder über ein lokales Netz angeschlossen sein.

Das DBMS 10 unterhält eine Datenbank 18, deren Datenbestände W(i) auf geeigneten Speichermedien (z. B. in Fig. 1 nicht gezeigte Festplatten) abgelegt sind. Im vorliegenden Ausführungsbeispiel ist das DBMS 10 ein an sich bekanntes System, das beispielsweise als objektorientiertes oder indexsequentielles oder relationales Datenbankverwaltungssystem ausgestaltet sein kann. Geeignete Produkte sind gegenwärtig unter den Marken Microsoft SQL Server, FairCom c-tree und Pervasive BTrieve verfügbar. Im hier beschriebenen Ausführungsbeispiel wird das DBMS 10 von einem von dem Server 12 getrennten Rechner oder Rechnercluster ausgeführt; es sind jedoch auch Ausführungsvarianten vorgesehen, bei denen das DBMS 10 auf dem Server 12 läuft.

Der Server 12 ist ein leistungsfähiger Rechner oder ein Rechnercluster. Der Server 12 führt ein Umsetzprogramm 20 aus, das einen Großteil der erfindungsgemäßen Verarbeitungsschritte, soweit sie serverseitig erfolgen, ausführt. Das Umsetzprogramm 20 kommuniziert einerseits mit dem DBMS 10 über eine native Schnittstelle oder eine ODBC-Schnittstelle (*Open Database Connectivity*) und vermag andererseits Daten über das Kommunikationsnetz 16 mit dem Client 14 auszutauschen. Hauptfunktion des Umsetzprogramms 20 ist es, Anforderungen des Client 14 in geeigneter Weise zu bearbeiten und entsprechende Antworten zu liefern.

Im hier beschriebenen Ausführungsbeispiel setzt das Umsetzprogramm 20 objektorientierte Paradigmen ein. In einem lokalen Objektspeicher 22 verwaltet das Umsetzprogramm 20 dazu Datenbestände B(i), in denen sich Informationen aus der Datenbank 18 in einer für den Client 14 geeigneten Aufbereitung widerspiegeln. Das Umsetzprogramm 20 führt dabei die zur Anbindung an das DBMS 10 erforderlichen Transformationsschritte zwischen der Objektstruktur der Datenbestände B(i) und der Objekt- oder Tabellenstruktur der DBMS-Datenbestände W(i) durch.

Der Client 14 ist ein tragbarer Rechner, der beispielsweise als PDA (*personal digital assistant*) oder als erweitertes Mobiltelefon (*smartphone*) oder als Laptop-Rechner mit einer Funkschnittstelle ausgestaltet ist. Der Client 14 weist eine beispielsweise als graphischer LCD-Bildschirm ausgestaltete Anzeige 24 und eine alphanumerische Tastatur 26 auf. Statt oder zusätzlich zu der Tastatur 26 können andere Eingabemittel, beispielsweise eine berührungsempfindliche Fläche, vorgesehen sein.

Der Client 14 wird von einem geeigneten Betriebssystem (z.B. einem der unter den Marken Microsoft Windows CE oder Symbian EPOC bekannten Systeme) gesteuert und führt eine Clientanwendung 28 aus. Die Clientanwendung 28 stellt die für die Anbindung des Client 14 an die Datenbank 18 erforderlichen Funktionen bereit. Insbesondere sind dies eine Benutzerschnittstelle, Funktionen zur Verwaltung eines clientseitigen Datenspeichers 30 und Funktionen zum Datenaustausch über das Kommunikationsnetz 16. Im clientseitigen Datenspeicher 30 werden Client-Datenbestände V(i) abgelegt, die unter Berücksichtigung der spezifischen Anforderungen des Client 14 erstellt worden sind. Die Benutzerschnittstelle nutzt die Anzeige 24 und die Tastatur 26, um dem Benutzer geeignete Ausschnitte aus Datensätzen der Client-Datenbestände V(i) darzustellen bzw. Befehle vom Benutzer entgegenzunehmen.

Das Kommunikationsnetz 16 ist in Fig. 1 nur schematisch gezeigt. Es besteht aus einer Vielzahl von an sich bekannten Hard- und Softwarekomponenten, die eine Datenübertragung zwischen dem Server 12 und dem Client 14 ermöglichen. Im vorliegenden Ausführungsbeispiel ist das Kommunikationsnetz 16 ein Weitverkehrsnetz mit relativ geringer Bandbreite, das zumindest streckenweise eine Funkübertragung vorsieht. Die Funkübertragung erfolgt beispielsweise gemäß einem der an sich bekannten Systeme GSM, HSCSD, GPRS oder UMTS. Im vorliegenden Ausführungsbeispiel wird ein paketorientiertes Datenübertragungsprotokoll wie beispielsweise TCP/IP eingesetzt. Die Datenübertragung erfolgt komprimiert, verschlüsselt und unter Verwendung von Kontrollkennzahlen, um ein Ausspähen oder eine Manipulation der übertragenen Daten zu verhindern. Als ein "Datenübertragungsvorgang" im Kommunikationsnetz 16 wird in diesem Kontext die Übertragung eines Datenpakets P bezeichnet. In Ausführungsalternativen werden im Kommunikationsnetz 16 andere Übertragungstechnologien eingesetzt.

Die zur Übertragung eines Datenpakets im Kommunikationsnetz 16 benötigte Zeit setzt sich aus einer von der Paketgröße im wesentlichen unabhängigen Paketlaufzeit und einer Transferzeit zusammen. Die Transferzeit berechnet sich hierbei aus der Paketgröße geteilt durch die Übertragungsrate. Eine Eigenschaft der im vorliegenden Ausführungsbeispiel verwendeten Funkübertragungstechnik ist, daß die Paketlaufzeit relativ hoch ist. Auf die im folgenden noch im Detail beschriebene Art wird daher die Anzahl der beim Betrieb des Systems anfallenden Datenübertragungsvorgänge über das Kommunikationsnetz 16 gering gehalten. Dabei wird in Kauf genommen, daß sich die Paketgröße erhöht und daß möglicherweise auch Daten übertragen werden, die nicht oder noch nicht benötigt werden. Ferner werden vom Benutzer vorgenommene Datenänderungen zusammengefaßt, um in einem einzigen Übertragungsvorgang vom Client 14 gesendet werden zu können.

In Tabelle 1 sind am Beispiel einer einfachen Auftragsverwaltung Schemata für DBMS-Datenbestände W(i), i = 1, 2, ..., 6, gezeigt. Jeder in der Datenbank 18 gehaltene DBMS-Datenbestand W(i) enthält in der Regel mehrere Datensätze W(i,j), die jeweils die in Tabelle 1 gezeigten Attribute aufweisen. In jedem DBMS-Datenbestand W(i) ist ein Primärschlüssel vorgesehen. Verknüpfungen zwischen den Datenbeständen W(i) sind in Tabelle 1 durch Pfeile angegeben. Ein nach rechts gerichteter Pfeil wie z.B. der Pfeil "→ Auftrag" beim Schema für den DBMS-Datenbestand W(6): Auftragsposition weist darauf hin, daß jeder Auftragspositions-Datensatz W(6,j) Zusatzinformationen zu einem Auftrags-Datensatz W(5,j) enthält. Entsprechend weist z.B. der nach links gerichtete Pfeil "← Artikel" beim Schema für den DBMS-Datenbestand W(6): Auftragsposition darauf hin, daß jeder Auftragspositions-Datensatz W(6,j) einen Artikel-Datensatz W(3,j') mit Zusatzinformationen zu der jeweiligen Auftragsposition referenziert.

Durch das Umsetzprogramm 20 werden die DBMS-Datenbestände W(i) als modellkonforme Datenbestände B(i) abgebildet. Die modellkonformen Datenbestände B(i) können, abhängig von der Ausführungsform des Umsetzprogramms 20 und den konkreten Gegebenheiten wie z.B. dem vorhandenen Speicherplatz, im Objektspeicher 22 zwischengespeichert werden oder ohne Zwischenspeicherung unmittelbar aus Antworten des DBMS 10 abgeleitet werden.

In Tabelle 2 ist der Aufbau der modellkonformen Datenbestände B(i) dargestellt. Generell wird ein Datenbestand B(i) zur Verwaltung eines DBMS-Datenbestandes W(i) dann als modellkonform bezeichnet, wenn er sämtliche Daten enthält oder referenziert, die clientseitig zur Bearbeitung eines Datensatzes W(i,j) von W(i) benötigt werden. Ein modellkonformer Datenbestand B(i) enthält Nutzdaten G(i) sowie optional Selektionskriterien K(i) und/oder Hilfsdaten H(i). Die Nutzdaten G(i) eines modellkonformen Datenbestandes B(i) sind aus je einer entsprechenden modellkonformen Datenmenge M(i) abgeleitet. Tabelle 3 zeigt die modellkonformen Datenmengen M(i), i = 1, 2, ..., 5 für die hier beispielhaft beschriebene Auftragsverwaltung.

Die Datensätze M(i,j) einer modellkonformen Datenmenge M(i) weisen Felder für Attribute A(i), Referenzen R(i) und eingebettete Datenmengen E(i) auf. Die Attribute A(i) entsprechen denjenigen Attributen der zugrundeliegenden DBMS-Datenbestände W(i), die dem Benutzer auf dem Client 14 angezeigt bzw. die vom Benutzer neu eingegeben, geändert oder gelöscht werden können. Die Referenzen R(i) stellen Verweise auf Datensätze anderer modellkonformer Datenmengen dar. Eingebettete Datenmengen E(i) sind Datensatz-Felder aus anderen Datenbeständen, die in die jeweilige modellkonforme Datenmenge M(i) übernommen werden. Eingebettete Datenmengen E(i) werden als clientseitige Kopien der übernommenen Daten verwaltet. Die Einbettung ist insbesondere für Datenmengen mit relativ geringem Umfang sinnvoll, wie dies z.B. bei den Artikelpreisen in der modellkonformen Datenmenge M(3) der Fall ist.

Die optional in einem modellkonformen Datenbestand B(i) enthaltenen Selektionskriterien K(i) beschreiben, auf welche Weise die Datensätze M(i,j) der modellkonformen Datenmengen M(i) ausgewählt werden, um die jeweiligen Nutzdaten G(i) zu bilden. Die Selektionskriterien K(i) können sich auf ein oder mehrere Datensatz-Felder beziehen.

Beispielsweise kann der Benutzer als Selektionskriterium K(2,1) durch die clientseitige Eingabe "1*" festlegen, daß in die Nutzdaten G(2) nur solche Datensätze M(2,j) aufgenommen werden sollen, deren Kundennummer-Attribut A(2,1) mit der Ziffer "1" beginnt. In Ausführungsalternativen werden die Selektionskriterien K(i) nicht schon bei der Bildung der Nutzdaten G(i) angewendet, sondern erst in Zusammenhang mit der Übertragung zum Client 14.

```
DBMS-Datenbestand W(1): Sprache
    INT Sprache_ID;                    // Primärschlüssel
    CHAR Bezeichnung[40];
```

```
DBMS-Datenbestand W(2): Kunde
    INT Kunde_ID;                      // Primärschlüssel
    CHAR KundenNr[15];
    CHAR SuchCode[20];
    CHAR Vorname[25];
    CHAR Nachname[25];
    ...
    INT Sprache_ID;                    ← Sprache
```

```
DBMS-Datenbestand W(3): Artikel
    INT Artikel_ID;                    // Primärschlüssel
    CHAR ArtikelNr[5];
    CHAR Beschreibung[80];
```

```
DBMS-Datenbestand W(4): Artikelpreis
    INT ArtikelPreis_ID;               // Primärschlüssel
    INT Artikel_ID;                    → Artikel
    DATE Datum;
    NUMERIC Preis(15,2);
```

```
DBMS-Datenbestand W(5): Auftrag
    INT Auftrag_ID;                    // Primärschlüssel
    INT Kunde_ID;                      → Kunde
    CHAR AuftragNr[18];
    DATE Datum;
    TIME Zeit;
    BOOLEAN Bearbeitet;
```

```
DBMS-Datenbestand W(6): Auftragsposition
    INT AuftragPosition_ID;            // Primärschlüssel
    INT Auftrag_ID;                    → Auftrag
    INT Artikel_ID;                    ← Artikel
    NUMERIC Menge(9,3);
```

Tabelle 1: Schemata für DBMS-Datenbestände

**Modellkonformer Datenbestand B(1): Sprache**

| | |
|---|---|
| Selektionskriterien K(1): | keine |
| Nutzdaten G(1): | alle Datensätze der Datenmenge M(1) |
| Hilfsdaten H(1): | keine |

**Modellkonformer Datenbestand B(2): Kunde**

| | |
|---|---|
| Selektionskriterien K(2): | K(2,1): Kundennummer gemäß A(2,1) |
| | K(2,2): Suchcode gemäß A(2,2) |
| Nutzdaten G(2): | diejenigen Datensätze der Datenmenge M(2), für die die aktuellen Selektionskriterien K(2,1) und K(2,2) erfüllt sind |
| Hilfsdaten H(2): | H(2,1): Datenmenge M(1): Sprache |

**Modellkonformer Datenbestand B(3): Artikel**

| | |
|---|---|
| Selektionskriterien K(3): | K(3,1): Artikelnummer gemäß A(3,1) |
| Nutzdaten G(3): | diejenigen Datensätze der Datenmenge M(3), für die das aktuelle Selektionskriterium K(3,1) erfüllt ist |
| Hilfsdaten H(3): | keine |

**Modellkonformer Datenbestand B(4): Auftrag**

| | |
|---|---|
| Selektionskriterien K(4): | keine |
| Nutzdaten G(4): | diejenigen Datensätze der Datenmenge M(4), die dem jeweils ausgewählten Datensatz der Nutzdaten G(2): Kunde entsprechen |
| Hilfsdaten H(4): | keine |

**Modellkonformer Datenbestand B(5): Auftragsposition**

| | |
|---|---|
| Selektionskriterien K(5): | keine |
| Nutzdaten G(5): | diejenigen Datensätze der Datenmenge M(5), die dem jeweils ausgewählten Datensatz der Nutzdaten G(4): Auftrag entsprechen |
| Hilfsdaten H(5): | keine |

Tabelle 2: Aufbau der modellkonformen Datenbestände

---

**Modellkonforme Datenmenge M(1): Sprache**

| Attribut A(1,1): | CHAR Bezeichnung[40]; |

---

**Modellkonforme Datenmenge M(2): Kunde**

Attribut A(2,1):       CHAR KundenNr[15];
Attribut A(2,2):       CHAR SuchCode[20];
Attribut A(2,3):       CHAR Vorname[25];
Attribut A(2,4):       CHAR Nachname[25];
...
Referenz R(2,1):       Referenz auf Datensatz der
                       Datenmenge M(1): Sprache

---

**Modellkonforme Datenmenge M(3): Artikel**

Attribut A(3,1):                 CHAR ArtikelNr[5];
Attribut A(3,2):                 CHAR Beschreibung[80];
eingebettete Datenmenge E(3,1):  Datensätze mit Attributen
                                 für Datum und Preis gemäß
                                 externem Datenbestand
                                 W(4): Artikelpreis

---

**Modellkonforme Datenmenge M(4): Auftrag**

Attribut A(4,1):       CHAR AuftragNr[18];
Attribut A(4,2):       DATE Datum;
Attribut A(4,3):       TIME Zeit;
Attribut A(4,4):       BOOLEAN Bearbeitet;

---

**Modellkonforme Datenmenge M(5): Auftragsposition**

Referenz R(5,1):       Referenz auf Datensatz der
                       Datenmenge M(3): Artikel
Attribut A(5,1):       NUMERIC Menge(9,3);

---

Tabelle 3: Schemata für modellkonforme Datenmengen

Eine weitere Selektion der Nutzdaten G(i) findet bei abhängigen Datenbeständen B(i') statt. In der hier verwendeten Wortwahl ist ein modellkonformer Datenbestand B(i') dann von dem Datenbestand B(i) abhängig, wenn eine Zuordnung von jedem Datensatz G(i',j') der Nutzdaten von B(i') zu je einem Datensatz G(i,j) der Nutzdaten von B(i) existiert. In der beispielhaft beschriebenen Auftragsverwaltung ist somit der Datenbestand B(4): Auftrag abhängig vom Datenbestand B(2): Kunde, und der Datenbestand B(5): Auftragsposition ist abhängig vom Datenbestand B(4): Auftrag. Die Datenbestände B(1), B(2) und B(3) sind nicht abhängig. Allgemein bilden die Abhängigkeiten von Datenbeständen eine Baumstruktur; zirkuläre Abhängigkeiten sind nicht erlaubt. Jede Struktur voneinander abhängiger Datenbestände und jeder einzelne unabhängige Datenbestand wird als Datenbestandshierarchie bezeichnet. Im vorliegenden Beispiel bestehen daher drei Datenbestandshierarchien, nämlich die Hierarchie { B(1) }, die Hierarchie { B(3) } und die Hierarchie { B(2) → B(4) → B(5) }. Durch die Pfeile wird hier das Abhängigkeitsverhältnis ausgedrückt.

Wie bereits erwähnt, erfolgt bei den Nutzdaten G(i') eines abhängigen Datenbestandes B(i') eine Selektion dahingehend, daß nur diejenigen Datensätze M(i',j') der zugrundeliegenden modellkonformen Datenmenge M(i') in die Nutzdaten G(i') aufgenommen werden, die einem jeweils vom Benutzer ausgewählten Datensatz G(i,j) desjenigen Datenbestandes B(i) entsprechen, von dem der Datenbestand B(i') abhängig ist. Hat beispielsweise der Benutzer mittels des Client 14 den Nutzdatensatz G(2,i) eines Kunden ausgewählt, so werden in den abhängigen Datenbestand B(4) nur diejenigen Nutzdatensätze G(4,i') aufgenommen, die Aufträge dieses Kunden darstellen. Zur Bestimmung der Nutzdaten G(4) führt das Umsetzprogramm 20 in diesem Zusammenhang eine Datenbank-Anfrage aus, in der diejenigen Datensätze W(5,i') des DBMS-Datenbestandes W(5) ausgewählt werden, deren im Feld "Kunde_ID" gespeicherte Kundennummer gleich der Kundennummer des vom Benutzer ausgewählten Kunden (Attribut A(2,1) des vom Benutzer gewählten Datensatzes M(2,i)) ist.

Die modellkonformen Datenbestände B(i) können ferner Hilfsdaten H(i) enthalten. Solche Hilfsdaten H(i) sind Kopien von modellkonformen Datenmengen M(i') anderer Datenbestände B(i'). Die als Hilfsdaten H(i) kopierten Datenmengen M(i') werden mit dem Datenbestand B(i) an den Client 14 übertragen und dort zur Bearbeitung des Datenbestandes B(i) benötigt. Es ist eine Optimierungsentscheidung, ob eine Datenmenge M(i') in die Hilfsdaten H(i) anderer Datenbestände B(i) aufgenommen wird oder nicht. Bei Datenmengen M(i') mit geringem Datenumfang bietet sich diese Maßnahme an, weil dadurch eine gesonderte Übertragung der Datenmengen M(i') entfällt. Dies ist beispielsweise bei der Datenmenge M(1) der Fall, die als Kopie im Datenbestand B(2) vorliegt. In der Regel ist die Aufnahme einer Datenmenge M(i') in die Hilfsdaten H(i) eines anderen Datenbestandes B(i) dann nicht sinnvoll, wenn die Datenmenge M(i') einen großen Umfang aufweist (z.B. bei Datenmenge M(3) der Fall) oder wenn die Datenmenge M(i') einem abhängigen Datenbestand B(i') zugeordnet ist (z.B. bei Datenmengen M(4) und M(5) der Fall) oder wenn keine Referenzierungen auf die Datenmenge M(i') erfolgen (z.B. bei Datenmenge M(2) der Fall).

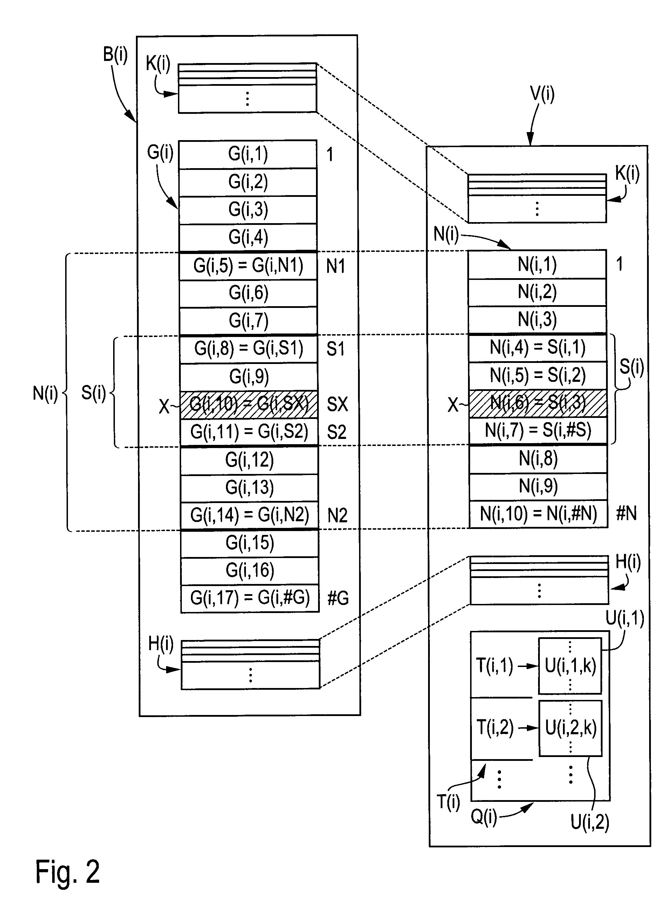

Fig. 2 zeigt links einen modellkonformen Datenbestand B(i) gemäß Tabelle 2 mit Selektionskriterien K(i), Nutzdaten G(i) und Hilfsdaten H(i). Die Nutzdaten G(i) enthalten #G Datensätze G(i,1), G(i,2), ..., G(i,#G). Der Abschnitt vom N1-ten bis zum N2-ten Datensatz der Nutzdaten G(i) wird als Clientabschnitt N(i) bezeichnet. Innerhalb des Clientabschnitts N(i) ist ein Anzeigeabschnitt S(i) angeordnet, der sich vom S1-ten bis zum S2-ten Datensatz der Nutzdaten G(i) erstreckt. Im Anzeigeabschnitt S(i) befindet sich ein ausgewählter Datensatz X = G(i,SX), der in Fig. 2 durch eine Schraffur markiert ist. Die Anzahl der Datensätze N(i,j) des Clientabschnitts N(i) beträgt #N = N2 +1 - N1, und die Anzahl der Datensätze S(i,j) des Anzeigeabschnitts S(i) beträgt #S = S2 + 1 - S1. Aufgrund der definitionsgemäßen Verschachtelung von Nutzdaten G(i), Clientabschnitt N(i), Anzeigeabschnitt S(i) und ausgewähltem Datensatz X gelten stets die folgenden Ungleichungen:

$$(1) \qquad 0 \leq \#S \leq \#N \leq \#G$$

$$(2) \qquad 1 \leq N1 \leq S1 \leq SX \leq S2 \leq N2 \leq \#G$$

$$(3) \qquad N1 \leq \#G + 1 - \#N$$

$$(4) \qquad S1 \leq \#G + 1 - \#S$$

$$(5) \qquad N1 \leq S2 + 1 - \#S$$

$$(6) \qquad S1 \leq N2 + 1 - \#S$$

In Fig. 2 ist ferner die Beziehung des Datenbestands B(i) zu einem entsprechenden Client-Datenbestand V(i) dargestellt. Der Client-Datenbestand V(i), der von der Clientanwendung 28 im Datenspeicher 30 verwaltet wird, enthält die Datenbestände K(i) und H(i) des Datenbestands B(i) sowie den Clientabschnitt N(i) der Nutzdaten G(i). Die insgesamt #N Datensätze N(i,j) des Clientabschnitts N(i) sind identisch zu den entsprechenden Datensätzen der Nutzdaten G(i); es gilt also G(i,N1) = N(i,1), G(i,N1+1) = N(i,2), ..., G(i,N2) = N(i,#N). Ebenso sind die insgesamt #S Datensätze S(i,j) des Anzeigeabschnitts S(i) identisch zu den entsprechenden Datensätzen der Nutzdaten G(i); hierfür gilt G(i,S1) = S(i,1), G(i,S1+1) = S(i,2), ..., G(i,S2) = N(i,#S).

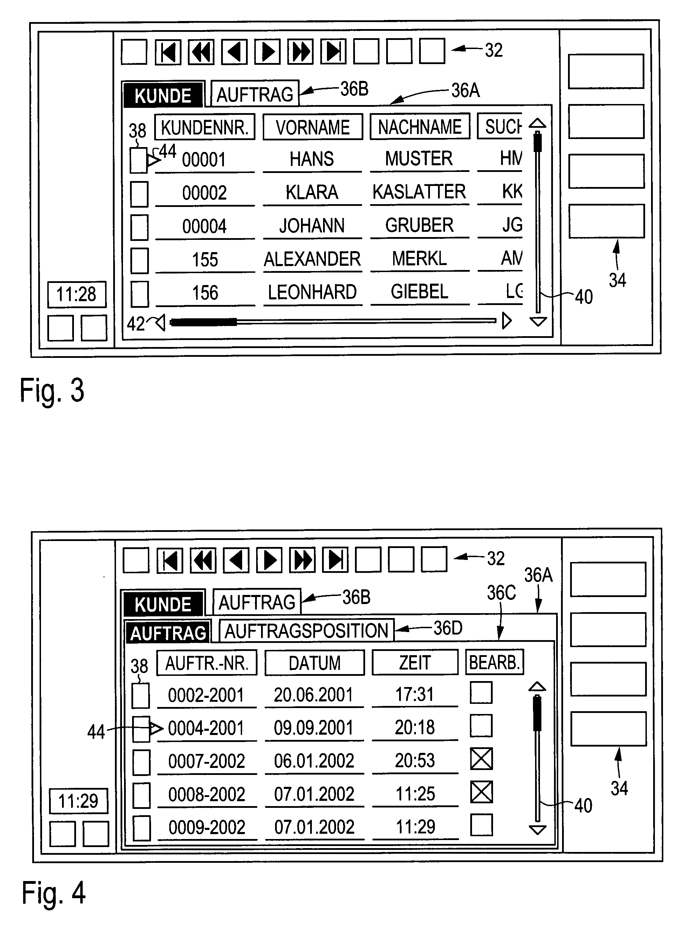

Im Betrieb des Gesamtsystems stellt der Client 14 auf seiner Anzeige 24 die im Anzeigeabschnitt S(i) enthaltenen Datensätze der Nutzdaten G(i) dar. Dies ist in Fig. 3 am Beispiel der Nutzdaten G(2) aus dem Datenbestand B(2): Kunde und in Fig. 4 am Beispiel der Nutzdaten G(4) aus dem Datenbestand B(4): Auftrag gezeigt. Die in Fig. 3 und Fig. 4 beispielhaft dargestellte Benutzerschnittstelle weist Bedientasten 32, Steuertasten 34 und einen Darstellungsbereich für Karteikarten 36A, 36B, ... auf. Die Bedientasten 32 dienen insbesondere zum Navigieren durch den Datenbestand, zum Einstellen von Anzeigeparametern (z.B. der Buchstabengröße) und zum Auslösen von Kommunikationsvorgängen (z.B. Bestätigen von Änderungen). Die Steuertasten 34 sind durch den Benutzer konfigurierbar und können z.B. mit den gerade genannten Funktionen belegt werden.

Die Karteikarten 36A, 36B, ... zeigen je einen Ausschnitt aus den vom System verwalteten Datenbeständen an. Jede Karteikarte 36A, 36B, ... weist eine nach oben vorstehende Zunge auf, die den Namen des jeweils der Karteikarte 36A, 36B, ... zugeordneten Datenbestands enthält. In Fig. 3 sind beispielsweise zwei Karteikarten 38A, 38B mit den Bezeichnungen "Kunde" und "Auftrag" dargestellt. Die Karteikarte 38A "Kunde" ist aktiviert; dies wird durch eine invertierte Darstellung des Titels "Kunde" angezeigt. Ferner ist die Karteikarte 38A im Vordergrund vollständig zu sehen; die im Hintergrund befindliche Karteikarte 38B "Auftrag" ist bis auf ihre Zunge verdeckt. Der jeweilige Datenbestand wird auf den Karteikarten 36A, 36B, ... in Form einer Tabelle dargestellt. Jede Tabellenspalte entspricht einem Attribut der angezeigten Datensätze. Die Bezeichnung des jeweiligen Attributs findet sich als Spaltenüberschrift; so zeigt Fig. 3 beispielsweise Spalten für die Attribute "Kundennummer", "Vorname", "Nachname" und teilweise "Suchcode".

Jede Tabellenzeile entspricht einem Datensatz. Links weist jede Zeile ein Statusfeld 38 auf, dann folgen die Werte der jeweiligen Spaltenattribute im angezeigten Datensatz. Die erste Tabellenzeile in Fig. 3 zeigt beispielsweise den Datensatz eines Kunden mit der Kundennummer "00001", dem Vornamen "Hans", dem Nachnamen "Muster" und einem mit "HM" beginnenden Suchcode HM. Der angezeigte Tabellenausschnitt kann mit einer vertikalen und einer horizontalen Navigationsleiste 40, 42 verschoben werden. Je ein Datensatz ist vom Benutzer ausgewählt. Der ausgewählte Datensatz wird durch eine dreieckige Markierung 44 beim Statusfeld 38 der entsprechenden Tabellenzeile (in Fig. 3 die erste Zeile, in Fig. 4 die zweite Zeile) angezeigt.

Bei den in Fig. 4 beispielhaft gezeigten vier Karteikarten 36A - 36D ist die Karte 36C "Auftrag" von der aktiven Karteikarte 36A "Kunde" abhängig. Dies entspricht der Abhängigkeit des Datenbestandes B(4): Auftrag vom Datenbestand B(2): Kunde. Auf der Karteikarte 36C werden nur diejenigen Datensätze angezeigt, die vom dem ausgewählten Kunden (Markierung 44 auf der Karteikarte 36A) stammen. Entsprechend ist die in Fig. 4 im Hintergrund befindliche Karteikarte 36D "Auftragsposition" von der Karteikarte 36C "Auftrag" abhängig. Wenn der Benutzer die Karteikarte 36D selektiert und damit in den Vordergrund bringt, werden auf ihr nur Datensätze angezeigt, die in dem auf der Karteikarte 36C ausgewählten und durch die Markierung 44 gekennzeichneten Auftrag (in Fig. 4 dem Auftrag mit der Nummer "0004-2001") enthalten sind.

Als "Anzeigeumfang" des Client 14 wird hier die Anzahl von Datensätzen (Zeilen) bezeichnet, die auf der Anzeige 24 gleichzeitig dargestellt werden können. Der Anzeigeumfang hängt sowohl von dem Darstellungsumfang der Anzeige 24 ab als auch von Parametern, die sich zur Laufzeit des Systems jederzeit ändern können. Solche Parameter sind z.B. die vom Benutzer gewählte Schriftgröße, die Anzahl der angezeigten Karteikarten (in Fig. 3 wird für die Karteikarten-Zungen nur halb so viel Platz benötigt wie in Fig. 4) und die erforderlichen Navigationselemente (in Fig. 3 wird die horizontale Navigationsleiste 42 benötigt, in Fig. 4 nicht). In den vorliegenden Beispielen in Fig. 3 und Fig. 4 beträgt der Anzeigeumfang des Client 14 jeweils fünf Zeilen. Da der Anzeigeabschnitt S(i) als der jeweils auf der Anzeige 24 dargestellte Teil des Clientabschnitts N(i) definiert ist, gilt für den Umfang #S des Anzeigeabschnitts in beiden Fällen #S = 5. In Fig. 3 ist z.B. der Kunden-Datensatz N(2,S1) = S(2,1) ausgewählt, und in Fig. 4 ist der Auftrags-Datensatz N(4,S1+1) = S(4,2) ausgewählt.

Zurückkehrend zu Fig. 2 werden bei einem Kommunikationsvorgang vom Server 12 zum Client 14 stets zumindest diejenigen Daten übertragen, die benötigt werden, damit im lokalen Datenspeicher 30 der Clientabschnitt N(i) vollständig zur Verfügung steht. Der Anzeigeabschnitt S(i) wird auf der Anzeige 24 dargestellt; die weiteren Datensätze des Clientabschnitts N(i) ermöglichen eine Navigation des Benutzers durch den clientseitigen Datenbestand ohne weitere Client-Server-Kommunikation.

Eine Grundidee des hier beschriebenen Ausführungsbeispiels ist es, daß der Umfang des Clientabschnitts N(i) abhängig von dem Anzeigeumfang des Client 14 (und gegebenenfalls von weiteren Parametern wie der gegenwärtigen Navigationsrichtung des Benutzers und/oder der Position des Anzeigeabschnitts S(i) innerhalb des Datenbestands B(i)) gewählt und gegebenenfalls auch während der Laufzeit verändert wird. Konkreter umfaßt im vorliegenden Beispiel der Clientabschnitt N(i) insgesamt #N = (#S-1)+#S+(#S-1) = 3*#S - 2 Datensätze, sofern der aktuelle Anzeigeabschnitt S(i) auf beiden Seiten mehr als #S Datensätze von der unteren bzw. oberen Grenze des Datenbestands B(i) entfernt ist. Formal wird diese Bedingung wie folgt ausgedrückt:

$$(7) \qquad \text{falls } \#S < S1 \text{ und } S2 < \#G\text{-}\#S,$$

$$\text{dann } \#N = (\#S\text{-}1)\text{+}\#S\text{+}(\#S\text{-}1) = 3*\#S - 2$$

Falls sich der aktuelle Anzeigeabschnitt S(i) nahe genug an einer Grenze des Datenbestandes B(i) befindet, weist der Clientabschnitt N(i) dagegen im vorliegenden Ausführungsbeispiel nur #N = 2*#S - 1 Datensätze auf. Diese Eigenschaft läßt sich durch die beiden folgenden Bedingungen formalisieren:

$$(8) \qquad \text{falls } S1 \leq \#S, \text{ dann } \#N = (\#S\text{-}1)\text{+}\#S = 2*\#S - 1$$

$$(9) \qquad \text{falls } \#G\text{-}\#S \leq S2, \text{ dann } \#N = \#S\text{+}(\#S\text{-}1) = 2*\#S - 1$$

Im Beispiel von Fig. 2 gilt #G = 17, #S = 4, S1 = 8 und S2 = 11. Es sind daher die Voraussetzungen von Bedingung (7) erfüllt, so daß #N = 10 eingestellt wird. Wäre der Anzeigeabschnitt S(i) dagegen z.B. ganz ans Ende der Datensätze von G(i) verschoben (z.B. S1 = 14, S2 = 17), so würde ein kleinerer Clientabschnitt N(i) mit einem Umfang von #N = 7 gewählt werden.

Insgesamt wird durch die Bedingungen (1) bis (9) sichergestellt, daß der im lokalen Datenspeicher 30 des Client 14 enthaltene Clientabschnitt N(i) stets auch einige aktuell nicht auf der Anzeige 24 dargestellte Datensätze enthält. Dadurch wird in gewissem Umfang eine Navigation des Benutzers über den Anzeigeabschnitt S(i) hinaus (mit einer entsprechenden Verschiebung der auf der Anzeige 24 dargestellten Datensätze) ermöglicht, ohne daß eine Kommunikation zwischen dem Client 14 und dem Server 12 erforderlich ist. Der Zustand, bei dem die obigen Bedingungen (1) bis (9) erfüllt sind und bei dem sich der Clientabschnitt N(i) vollständig im Datenspeicher 30 befindet, wird auch als "N-optimaler" Zustand bezeichnet. Durch geeignetes Nachladen von Datensätzen strebt der Client 14 stets an, einen solchen N-optimalen Zustand zu erreichen. Auf diesen Aspekt wird später noch im Detail eingegangen.

In Ausführungsalternativen können insbesondere abgeänderte Bedingungen (7) bis (9) gewählt werden. So kann z.B. die Anzahl der Datensätze #N im Clientabschnitt N(i) vergrößert oder verkleinert werden, oder es können andere Abhängigkeiten der Datensatzanzahl #N von der Position des Anzeigeabschnitts S(i) festgelegt werden. Insgesamt sollte hierbei ein günstiger Kompromiß zwischen der Anzahl #N - #S der nicht oder noch nicht benötigten Datensätze und der Anzahl der Kommunikationsvorgänge zwischen dem Client 14 und dem Server 12 erreicht werden.

Es wird nun wieder auf Fig. 2 Bezug genommen. Neben den bereits beschriebenen Elementen weist der in Fig. 2 rechts gezeigte Client-Datenbestand V(i) noch einen Änderungs-Datenbestand Q(i) auf. Der Änderungs-Datenbestand Q(i) enthält Angaben zu Änderungen, die der Benutzer eingegeben und bislang noch nicht bestätigt hat.

Generell gilt im vorliegenden Ausführungsbeispiel für clientseitige Änderungen (dazu gehören neben der inhaltlichen Änderung eines Datensatzes auch das Einfügen neuer und das Löschen bestehender Datensätze), daß jede vom Benutzer veranlaßte Änderung vorab nur als vorläufig angesehen wird. Der Benutzer kann beliebig viele vorläufige Änderungen vornehmen. Diese werden clientseitig gespeichert, ohne daß eine Client-Server-Kommunikation erfolgt. Erst wenn die Änderungen durch einen weiteren ausdrücklichen Befehl des Benutzers bestätigt werden, werden diese in einem einzigen Kommunikationsvorgang an den Server 12 übertragen und dort in die Datenbank 18 übernommen. Vor dieser Bestätigung, also solange die Änderungen noch als vorläufig angesehen werden, kann jede Änderung vom Benutzer widerrufen werden.

Die vorläufigen Änderungen bleiben bei allen Navigationsvorgängen und Datenaktualisierungen erhalten. Der Benutzer erhält auf der Anzeige 24 stets den Datenbestand angezeigt, wie er sich aus den in der Datenbank 18 vorliegenden Daten unter Berücksichtigung aller vorläufigen, noch nicht bestätigten Änderungen ergibt. Im vorliegenden Ausführungsbeispiel werden dazu die vorläufigen Änderungen in Form geeigneter Änderungsdaten schon vor ihrer Bestätigung über das Kommunikationsnetz 16 zum Server 12 übertragen, damit die Ergebnisse von Datenbankabfragen, die zwischen dem Zeitpunkt der Änderungen und der Bestätigung liegen, dem Benutzer Ergebnisse liefern, die mit den vorgenommenen Änderungen konsistent sind. In Ausführungsalternativen können andere Strategien zur Bearbeitung von Änderungen vorgesehen sein; beispielsweise können Änderungen ausschließlich im Datenspeicher 30 vermerkt werden, oder sie können sofort oder nach Ablauf einer vorgegebenen Zeitdauer oder beim nächsten Kommunikationsvorgang automatisch in die Datenbank 18 übertragen werden.

Für jeden zu ändernden Datensatz G(i,j) in den Nutzdaten G(i) des Datenbestandes B(i) enthält der in Fig. 2 gezeigte Änderungs-Datenbestand Q(i) einen Sicherungs-Datensatz T(i,j), der die im Datensatz G(i,j) durchgeführten Änderungen protokolliert und den Inhalt des Datensatzes G(i,j) vor der Änderung festhält. Die Gesamtheit der Sicherungs-Datensätze T(i,j) wird als Sicherungs-Datenbestand T(i) bezeichnet. Jedem Sicherungs-Datensatz T(i,j) ist ferner ein (möglicherweise leerer) Einfüge-Datenbestand U(i,j) zugeordnet. Sind in einem Einfüge-Datenbestand U(i,j) Datensätze U(i,j,k) enthalten, so zeigt dies in der Regel an, daß vom Benutzer Änderungen vorgenommen wurden, bei denen die Datensätze U(i,j,k) unmittelbar hinter den Sicherungs-Datensatz T(i,j) eingefügt wurden.

Die im vorliegenden Ausführungsbeispiel vorgesehenen Strategien für das Ausführen von Änderungen werden nun im Detail beschrieben. In Ausführungsalternativen können dagegen die vorläufigen Änderungen auf andere Art clientseitig gespeichert werden, um die oben erwähnte oder eine ähnliche Funktionalität für den Benutzer zu erzielen.

Bei jeder Änderung eines bestehenden Datensatzes N(i,X) im Clientabschnitt N(i) der Nutzdaten G(i) werden, wie bereits angedeutet, die in N(i,X) durchgeführten Änderungen und der Inhalt von N(i,X) vor der Änderung im Sicherungs-Datensatz T(i,j) abgelegt und in den Sicherungs-Datenbestand T(i) übernommen. Der inhaltlich geänderte Datensatz N(i,X) wird, solange die Änderung noch nicht bestätigt ist, durch ein entsprechendes Symbol (z.B. einen Stern) im Statusfeld 38 der entsprechenden Zeile auf der Anzeige 24 markiert.

Bei der Löschung eines bestehenden Datensatzes N(i,X) im Clientabschnitt N(i) der Nutzdaten G(i) wird der Datensatz N(i,X) für die Löschung vermerkt. Ein Hinweis auf die beabsichtigte Löschung und der Inhalt von N(i,X) vor der Löschung werden als Sicherungs-Datensatz T(i,j) in den Sicherungs-Datenbestand T(i) aufgenommen. Der zur Löschung vorgemerkte Datensatz N(i,X) wird auf der Anzeige 24 weiterhin dargestellt, aber durch ein geeignetes Symbol (z.B. ein "X") im jeweiligen Statusfeld 38 gekennzeichnet.

Zur Neuanlage eines Datensatzes N(i,X) im Clientabschnitt N(i) der Nutzdaten G(i) wird der neue Datensatz N(i,X) in den Clientabschnitt N(i) eingefügt; die Länge #N des Clientabschnitts N(i) erhöht sich dadurch um ein Element. Es sei N(i,Y) der dem neu eingefügten Datensatz N(i,X) nächste Vorgänger-Datensatz des Clientabschnitts N(i), so daß sich zwischen N(i,X) und dem Vorgänger-Datensatz N(i,Y) ausschließlich neu angelegte und noch nicht bestätigte Datensätze im Clientabschnitt N(i) befinden. Dieser Datensatz N(i,Y) wird als Sicherungs-Datensatz T(i,j) in den Sicherungs-Datenbestand T(i) aufgenommen, und der neue Datensatz N(i,X) wird in den Einfüge-Datenbestand U(i,j) von T(i,j) aufgenommen. Existiert kein Vorgänger-Datensatz N(i,Y), der die obigen Bedingungen erfüllt, so wird der neue Datensatz N(i,X) in den Einfüge-Datenbestand U(i,j') eines am Ende der Nutzdaten G(i) gespeicherten Pseudo-Vorgängerdatensatzes aufgenommen.

Wenn beispielsweise in Fig. 2 die Datensätze N(i,X) und N(i,X') unmittelbar hinter den existierenden Datensatz N(i,4) aufgenommen werden sollen, dann werden diese Datensätze in N(i) eingefügt, N(i,4) wird z.B. als Datensatz T(i,2) in T(i) gespeichert, und N(i,X) und N(i,X') werden als U(i,2,1) und U(i,2,2) in U(i,2) aufgenommen. Wiederum wird jeder neu eingefügte, aber noch nicht bestätigte Datensatz N(i,X) im Statusfeld 38 gekennzeichnet.

Innerhalb einer Datenbestandshierarchie können Änderungen an den Nutzdaten G(i') eines Datenbestands B(i') auch eine Protokollierung in den Nutzdaten G(i) eines hierarchisch übergeordneten Datenbestands B(i) erforderlich machen. Wenn also B(i') von B(i) abhängig ist und ein Datensatz N(i',j') des Datenbestands B(i') vom Benutzer geändert wird, so wird auch der gemäß dem Abhängigkeitsverhältnis zugeordnete Datensatz N(i,j) des Datenbestands B(i) als geändert angesehen. Der Datensatz N(i,j) wird demgemäß in den Sicherungs-Datenbestand T(i) übernommen. Sind beispielsweise Änderungen bei mindestens einem Auftrag eines Kunden vorgenommen (aber noch nicht bestätigt) worden, so wird der entsprechende Kunden-Datensatz auch als geändert angesehen. Dies wird wiederum durch ein Symbol (z.B. einen Pfeil) im Statusfeld 38 signalisiert.

Die fiktive Änderung von hierarchisch übergeordneten Datensätzen N(i,j) wird wieder aufgehoben, sobald alle Änderungen von abhängigen Datensätzen N(i',j') rückgängig gemacht wurden. Der Datensatz N(i,j) wird dann wieder aus dem Sicherungs-Datenbestand T(i) entfernt. Auch das Statusfeld 38 wird entsprechend zurückgesetzt.

Zum Widerrufen einer noch nicht bestätigten Neuanlage eines Datensatzes N(i,X) wird dieser aus dem Clientabschnitt N(i) sowie aus dem Einfüge-Datenbestand U(i,j) des dem Vorgänger-Datensatz N(i,Y) zugeordneten Sicherungs-Datensatzes T(i,j) entfernt. Ist dann der Einfüge-Datenbestand U(i,j) leer, so wird auch der Sicherungs-Datensatz T(i,j) aus dem Sicherungs-Datenbestand T(i) gelöscht. Zum Widerrufen einer noch nicht bestätigten inhaltlichen Änderung des Datensatzes N(i,X) wird N(i,X) durch den in den entsprechenden Sicherungs-Datensatz T(i,j) geretteten Inhalt von N(i,X) unmittelbar vor der Änderung überschrieben. Der Sicherungs-Datensatz T(i,j) wird dann gelöscht. Das Widerrufen einer noch nicht bestätigten Datensatz-Löschung erfolgt entsprechend.

In Fig. 5 ist schematisch der Speicherinhalt des serverseitigen Objektspeichers 22 und des clientseitigen Datenspeichers 30 während des Betriebs des Gesamtsystems dargestellt. Im Objektspeicher 22 werden die modellkonformen Datenbestände B(i) abgelegt; in Fig. 5 sind beispielhaft die Datenbestandshierarchien { B(1) }, { B(3) } und { B(2) → B(4) → B(5) } der oben beschriebenen Auftragsverwaltung gezeigt. Für jeden Datenbestand B(i) im Objektspeicher 22 existiert ein entsprechender Client-Datenbestand V(i) im Datenspeicher 30. Zwischen dem Client 14 und dem Server 12 finden Kommunikationsvorgänge statt, die in Fig. 5 durch das Übertragen eines ersten Datenpakets P(1) vom Client 14 zum Server 12 sowie das Übertragen eines zweiten Datenpakets P(2) vom Server 12 zum Client 14 dargestellt sind. In der Regel wird die Kommunikation vom Client 14 mit einer Anfrage (Paket P(1)) angestoßen, und der Server 12 reagiert darauf mit einer Antwort (Paket P(2)).

Das Ziel der Kommunikation zwischen dem Server 12 und dem Client 14 ist erstens das Herstellen oder Wiederherstellen eines N-optimalen Zustands aller Client-Datenbestände V(i) nach Navigationsvorgängen oder nach durch den Benutzer vorgenommenen, vorläufigen Änderungen und zweitens die im Zusammenhang mit der Bestätigung von Änderungen erforderliche Datenübertragung zum Server 12 und letztendlich zu der Datenbank 18. Diese beiden Arten der Kommunikation werden im folgenden im Detail beschrieben.

Bei Navigationsvorgängen verschiebt der Benutzer mittels der Bedientasten 32 den alten ausgewählten Datensatz, der im folgenden mit X' = G(i,SX') bezeichnet wird, innerhalb der Nutzdaten B(i). Als Resultat des Navigationsvorgangs liegt ein neuer ausgewählte Datensatz X = G(i,SX) vor. Beispielsweise kann der Benutzer den ersten Datensatz der Nutzdaten auswählen (SX = 1) oder den letzten Datensatz der Nutzdaten auswählen (SX = #G) oder den ausgewählten Datensatz um eine Zeile nach oben bewegen (SX = SX' - 1) oder den ausgewählten Datensatz seitenweise nach oben bewegen (SX = SX' - #S) oder den ausgewählten Datensatz entsprechend nach unten bewegen (SX = SX' + 1 bzw. SX = SX' + #S).

Wenn sich der neue ausgewählte Datensatz X noch innerhalb des Anzeigeabschnitts S(i) befindet, also S1 ≤ SX ≤ S2 gilt, dann braucht lediglich die auf der Anzeige 24 dargestellte Markierung 44 entsprechend verändert zu werden. Falls jedoch ein Datensatz X außerhalb des Anzeigeabschnitts S(i) ausgewählt wurde, dann liegt kein N-optimaler Zustand mehr vor, weil zumindest die obige Bedingung (2) nicht mehr erfüllt ist. Der Anzeigeabschnitt S(i) muß dann so verschoben werden, daß der neue ausgewählte Datensatz X wieder auf der Anzeige 24 sichtbar ist. Ist ferner eine Verschiebung und/oder Größenveränderung des Clientabschnitts N(i) erforderlich, um wieder einen N-optimalen Zustand gemäß den Bedingungen (1) - (9) zu erreichen, so müssen Datensätze des neuen geänderten Clientabschnitts N(i), die nicht im Datenspeicher 30 des Client 14 vorliegen, in einer Anfrage/Antwort-Kommunikation des Client 14 mit dem Server 12 zum Client 14 übertragen werden.

Die gerade erwähnte Anfrage/Antwort-Kommunikation besteht, wie in Fig. 5 dargestellt, aus der Übertragung der Anfrage in Form des ersten Datenpakets P(1) vom Client 14 zum Server 12 und aus der Übertragung der Antwort in Form des zweiten Datenpakets P(2) vom Server 12 zum Client 14.

Das erste Datenpaket weist im hier beschriebenen Ausführungsbeispiel vier Komponenten auf. Die erste Komponente gibt denjenigen Datensatz Z der Nutzdaten G(i) des Datenbestandes B(i) an, von dem der aktuelle Datenbestand B(i') abhängig ist. Hat der Benutzer beispielsweise als Ergebnis des Navigationsvorgangs den in Fig. 4 gezeigten Datensatz X = G(4,SX) der Nutzdaten G(4) des Datenbestands B(4): Auftrag ausgewählt, so ist Z derjenige Datensatz der Nutzdaten G(2) des Datenbestandes B(2): Kunde, der auf der entsprechenden, übergeordneten Karteikarte selektiert wurde (z.B. Karteikarte 36A in Fig. 3; Z ist also hier der Datensatz mit der Kundennummer "00001"). Als zweite Komponente des Datenpakets P(1) werden die aktuell gültigen Selektionskriterien K(i) an den Server 12 übermittelt, und als dritte Komponente der Änderungs-Datenbestand Q(i). Die vierte Komponente gibt den neu ausgewählten Datensatz X an, im Beispiel von Fig. 4 etwa den Datensatz G(4,SX) mit der Auftragsnummer "0004-2001".

Aufgabe des Servers 12 ist es, nach Erhalt des ersten Datenpakets P(1) eine geeignete Antwort in Form des zweiten Datenpakets P(2) zusammenzustellen. Dazu bestimmt der Server 12 zunächst durch eine entsprechende Anfrage an das DBMS 10 die Nutzdaten G(i) unter Berücksichtigung der aktuellen Selektionskriterien K(i) und, soweit vorhanden, des übergeordneten Datensatzes Z. Der Server 12 und/oder der Client 14 bestimmen ferner die durch N1 und N2 definierte Position des Clientabschnitts N(i) und die durch S1 und S2 definierte Position des Anzeigeabschnitts S(i) derart, daß wieder ein N-optimaler Zustand vorliegt. Im folgenden sollen die Positionswerte vor dem Navigationsvorgang (also die "alten" Werte) mit N1', S1', S2', N2' bezeichnet werden; entsprechend wird für den alten Client- bzw. Anzeigeabschnitt die Schreibweise N'(i) bzw. S'(i) verwendet.

Zunächst werden die neuen Werte S1 und S2 in Abhängigkeit von der Position SX des neuen ausgewählten Datensatzes X festgelegt. Im hier beschriebenen Ausführungsbeispiel ist vorgesehen, daß bei einer Navigationsrichtung in Fig. 2 nach oben (also in Richtung niedrigerer Positionswerte) über den bisherigen Clientabschnitt N'(i) hinaus, wenn also N1' > SX gilt, der neu ausgewählte Datensatz X die erste Position des neuen Anzeigeabschnitts S(i) einnimmt. Es gilt dann S1 = SX und S2 = SX + #S - 1. Wenn dagegen bei einem Navigationsvorgang der bisherige Clientabschnitt N'(i) in Richtung höherer Positionswerte verlassen wird (wenn also N2' < SX gilt), dann wird der neue ausgewählte Datensatz X an die letzte Position des neuen Anzeigeabschnitts S(i) gesetzt. Es gilt dann S1 = SX- #S + 1 und S2 = SX. In Ausführungsalternativen können andere Strategien verfolgt werden; beispielsweise kann der Anzeigeabschnitt S(i) stets symmetrisch um den neuen ausgewählten Datensatz X angeordnet werden.

Liegen die neuen Werte S1 und S2 fest, so wird der neue Clientabschnitt N(i) in Abhängigkeit von der Navigationsrichtung festgelegt, um einen N-optimalen Zustand herzustellen. Für die Navigation nach oben bzw. nach unten werden im vorliegenden Ausführungsbeispiel je drei Unterfälle unterschieden, die im folgenden beschrieben werden. In Ausführungsalternativen können andere Strategien vorgesehen sein, insbesondere solche, die ebenfalls zu einem N-optimalen Zustand führen oder einen solchen annähern.

Bei einer Verschiebung nach oben (N1' > S1) ist der erste Unterfall, daß sich der neue ausgewählte Datensatz X und damit der neue Anzeigeabschnitt S(i) höchstens #S Datensätze vom Anfang der Nutzdaten G(i) entfernt befinden (SX = S1 ≤ #S). In diesem Fall wird der neue Clientabschnitt N(i) ganz an den Anfang der Nutzdaten gelegt; es gilt N1 = 1 und, wegen Bedingung (8), #N = N2 = 2*#S - 1.

Der zweite Unterfall ist, daß sich der neue Anzeigeabschnitt S(i) und der bisherige Clientabschnitt N'(i) überlappen (S1 > #S und N1' ≤ S2). In diesem Fall wird der neue Clientabschnitt N(i) gegenüber dem bisherigen Clientabschnitt N(i) um 2*#S - 1 Datensätze nach "oben" verschoben; es gilt N1 = N1' - 2*#S + 1 und N2 = N2' - 2*#S + 1. Die "unteren" #S - 1 Datensätze des neuen Clientabschnitts N(i) sind bereits aus dem bisherigen Clientabschnitt N(i) im Datenspeicher 30 enthalten; es brauchen daher im Datenpaket P(2) nur die 2*#S - 1 Datensätze von G(i,N1') bis G(i, N1'+2*#S-2) zum Client 14 übertragen zu werden.

Im verbleibenden dritten Unterfall befindet sich der neue Anzeigeabschnitt S(i) hinreichend weit sowohl vom Anfang der Nutzdaten G(i) als auch vom bisherigen Anzeigeabschnitt S'(i) entfernt; es gilt S1 > #S und N1' > S2. In diesem Fall wird der neue Clientabschnitt N(i) symmetrisch um den neuen Anzeigeabschnitt S(i) angeordnet. Es gilt dann N1 = S1 - #S + 1 und, wegen Bedingung (7), N2 = S1 + 2*#S - 2.

Für eine Verschiebung nach unten (N2' < S2) wird spiegelbildlich zu der bereits beschriebenen Verschiebung nach oben verfahren. In Formelschreibweise lassen sich die drei zu berücksichtigenden Unterfälle wie folgt zusammenfassen:

a)  wenn #G - #S ≤ S2, dann N1 = #G - 2*#S + 2 und N2 = #G

b)  wenn #G - #S > S2 und S2 ≤ N2' + #S,

dann N1 = N1' + 2*#S - 1 und N2 = N2' + 2*#S - 1

c)  wenn #G - #S > S2 und S2 > N2' + #S,

dann N1 = S1 - #S + 1 und N2 = S2 + #S - 1

Wieder brauchen bei Fall b) nur die "unteren" 2*#S - 1 Datensätze übertragen zu werden; die "oberen" #S - 1 liegen bereits clientseitig im Datenspeicher 30 vor und können lokal ergänzt werden, um einen vollständigen Clientabschnitt mit 3*#S - 2 Datensätzen zu erhalten.

Vor der Übertragung des Antwort-Datenpakets P(2) gliedert das vom Server 12 ausgeführte Umsetzprogramm 20 eventuell vom Benutzer beabsichtigte, aber noch nicht bestätigte Änderungen in die zu übertragenden Daten ein. Mit anderen Worten wird das Antwort-Datenpaket P(2) so an den Client 14 ausgegeben, als ob alle vom Benutzer bislang nur beabsichtigten Änderungen bereits bestätigt und in der Datenbank 18 eingetragen worden wären. Die für diesen Schritt benötigten Informationen über die Änderungen sind in dem im Datenpaket P(1) enthaltenen Änderungs-Datenbestand Q(i) enthalten.

Eine Angleichung der vom DBMS 10 gelieferten Daten an noch nicht bestätigte Änderungen des Benutzers ist nur dann erforderlich, wenn zu mindestens einem Datensatz G(i,j), der an den Client 14 übertragen werden soll, im Änderungs-Datenbestand Q(i) ein Sicherungs-Datensatz T(i,j') enthalten ist. Ist der Sicherungs-Datensatz T(i,j') ein unmittelbarer Vorgänger von neu angelegten Datensätzen, dann wird der dem Sicherungs-Datensatz T(i,j') zugeordnete Einfüge-Datenbestand U(i,j') in die Nutzdaten G(i) eingefügt. Ist für den Datensatz G(i,j) eine weitere Änderung beabsichtigt, oder ist der Sicherungs-Datensatz T(i,j') kein unmittelbarer Vorgänger von neu angelegten Datensätzen, dann wird ferner der Datensatz G(i,j) entsprechend dem zugeordneten Sicherungs-Datensatz T(i,j') modifiziert.

Ausgehend von den gemäß den obigen Schritten bestimmten Nutzdaten G(i) überträgt der Server 12 im Antwort-Datenpaket P(2) zumindest diejenigen Datensätze G(i,j) an den Client 14, die in dem neuen Clientabschnitt N(i) enthalten sind und die noch nicht im Datenspeicher 30 des Client 14 vorliegen. Im vorliegenden Ausführungsbeispiel wird im ersten und dritten oben genannten Unterfall stets der gesamte neue Clientabschnitt N(i) an den Client 14 übertragen; im zweiten Unterfall dagegen nur die erwähnten 2*#S - 1 Datensätze. In Ausführungsalternativen können dagegen andere Übertragungsstrategien vorgesehen sein, bei denen z.B. stets der gesamte Clientabschnitt N(i) übertragen wird oder bei denen vor dem Kommunikationsvorgang noch genauer untersucht wird, ob nicht einzelne zur Übertragung vorgesehene Datensätze bereits im Datenspeicher 30 des Client 14 vorliegen.

In Fig. 5 sind als Komponenten des zweiten Datenpakets P(2) neben dem Clientabschnitt N(i) auch die Selektionskriterien K(i), die Hilfsdaten H(i) und der Änderungs-Datenbestand Q(i) gezeigt. Es versteht sich, daß diese Daten nur insoweit an den Client 14 gesendet werden müssen, wie sie noch nicht im lokalen Datenspeicher 30 vorliegen. So ist beispielsweise im vorliegenden Ausführungsbeispiel vorgesehen, den Änderungs-Datenbestand Q(i) weitgehend im Datenspeicher 30 zu halten. Falls der dort vorgesehene Platz jedoch nicht ausreicht, weil z.B. viele Änderungen vorgenommen wurden oder weil viele Datenbestände B(i) geöffnet sind, wird der Server 12 zur Speicherung des Änderungs-Datenbestands Q(i) herangezogen. Mit jedem Client-Abschnitt N(i) überträgt der Server 12 dann die jeweils zugehörigen Teile des Änderungs-Datenbestands Q(i) zum Client 14. Entsprechendes gilt auch für die Selektionskriterien K(i) sowie die Hilfsdaten H(i). Letztere müssen dem Client 14 überdies bei jedem Erstzugriff auf einen Datenbestand B(i) übermittelt werden.

Wie bereits erwähnt, werden die vom Benutzer angezeigten, vorläufigen Änderungen vor ihrer Bestätigung nicht in der Datenbank 18 gespeichert. Vielmehr sind diese Änderungen jederzeit durch den Benutzer widerrufbar. Durch Betätigung einer der Bedientasten 32 kann der Benutzer das Gesamtsystem veranlassen, daß alle beabsichtigten Änderungen, die in der gerade aktuellen Datenbestandshierarchie vorliegen, als endgültige Änderungen vom Client 14 zum Server 12 übertragen und in der Datenbank 18 gespeichert werden. Bei diesem Übertragungsvorgang werden für jeden Datenbestand B(i) der Datenbestandshierarchie Informationen zwischen Client 14 und Server 12 ausgetauscht, die ungefähr den in Fig. 5 dargestellten Datenpaketen P(1) und P(2) entsprechen. Wenn die Datenbestandshierarchie mehrere Datenbestände B(i) aufweist, werden im hier beschriebenen Ausführungsbeispiel alle benötigten Daten in ein einziges zum Server 12 gesendetes Anfrage-Datenpaket P(1) und ein einziges zum Client 14 gesendetes Antwort-Datenpaket P(2) zusammengefaßt. In Ausführungsalternativen können dagegen mehrere Kommunikationsvorgänge vorgesehen sein.

Zur Speicherung der temporären Änderungen übergibt der Client 14 für jeden Client-Datenbestand V(i) der aktuellen Datenbestandshierarchie, dessen Änderungs-Datenbestand Q(i) nicht leer ist, die folgenden Informationen an den Server 12:

- Angabe des Datensatzes Z, von dem der jeweilige Datenbestand V(i) abhängig ist,
- aktuell gültige Selektionskriterien K(i),
- Änderungs-Datenbestand Q(i),
- Angabe des aktuell ausgewählten Datensatzes X, und
- Angabe, ob Client-Datenbestand V(i) auf Anzeige 24 sichtbar ist.

Die einzelnen Datenbestände einer Hierarchie werden in Postorder-Reihenfolge verarbeitet. Dies heißt, daß jeder abhängige Datenbestand vor dem ihm jeweils übergeordneten Datenbestand abgearbeitet wird. Beispielsweise ist bei der Hierarchie { B(2) → B(4) → B(5) } die Verarbeitungsreihenfolge B(5), dann B(4), dann B(2). Bei Hierarchien mit baumförmiger Struktur erfolgt ein entsprechender Baumdurchlauf in Postorder-Reihenfolge.

Serverseitig werden für jeden Datenbestand B(i) in der Hierarchie die beabsichtigten Bestandsänderungen in die Datenbank 18 eingetragen. Jede beabsichtigte Änderung wird erst dann an das DBMS 10 übergeben, wenn alle davon abhängigen Änderungen bereits erfolgreich gespeichert werden konnten. Wenn auch die beabsichtigte Änderung erfolgreich in die Datenbank 18 eingetragen wurde, so wird der entsprechende Datensatz im Änderungs-Datenbestand Q(i) gelöscht. Konnte entweder die aktuell bearbeitete Änderung oder eine davon abhängige Änderung nicht erfolgreich eingetragen werden, so wird der Eintrag im Änderungs-Datenbestand Q(i) belassen und durch eine entsprechende Fehlermeldung ergänzt.

Das Antwort-Datenpaket P(2) enthält im vorliegenden Ausführungsbeispiel für alle bearbeiteten Datenbestände B(i) den zugehörigen Änderungs-Datenbestand Q(i). Diese ist leer, wenn die beabsichtigten Änderungen vollständig in der Datenbank 18 gespeichert werden konnten. Ist der entsprechende Client-Datenbestand V(i) oder ein davon abhängiger Datenbestand auf der Anzeige 24 sichtbar, so wird ferner ein N-optimaler Clientabschnitt N(i) zusätzlich im Antwort-Datenpaket P(2) abgelegt. Auch im Antwort-Datenpaket P(2) liegen die zurückgegebenen Informationen postorder-konform vor.

**Patentansprüche**

1. Verfahren zur Anbindung eines Client (14) an eine Datenbank (18) über einen Server (12), wobei der Client (14) und der Server (12) über ein Kommunikationsnetz (16) Daten auszutauschen vermögen, und wobei der Client (14) einen Datenspeicher (30) zur Speicherung von Datensätzen und eine Anzeige (24) zur Darstellung von im Datenspeicher (30) vorhandenen Datensätzen aufweist, **dadurch gekennzeichnet, daß** zur Minimierung der Anzahl der Übertragungsvorgänge bei der Kommunikation vom Server (12) zum Client (14) bei zumindest manchen Übertragungsvorgängen Datensätze an den Client (14) übertragen werden, die gegenwärtig nicht zur Darstellung auf der Anzeige (24) benötigt werden.

2. Verfahren nach Anspruch 1,
bei dem im Datenspeicher (30) eine erste Anzahl (#N) von Datensätzen gespeichert wird, von denen eine zweite Anzahl (#S) auf der Anzeige (24) dargestellt wird, wobei die erste Anzahl (#N) zumindest in der Mehrzahl der Betriebszustände zwischen dem 1,5-fachen und dem 20-fachen und bevorzugt zwischen dem 1,5-fachen und dem 5-fachen der zweiten Anzahl (#S) beträgt.

**3.** Verfahren nach Anspruch 2,
bei dem das Verhältnis zwischen der ersten Anzahl (#N) und der zweiten Anzahl (#S) zumindest auch von der Position der auf der Anzeige (24) dargestellten Datensätze und/oder eines ausgewählten Datensatzes (X) innerhalb eines Datenbestandes (B(i)) abhängt.

**4.** Verfahren nach einem der Ansprüche 1 bis 3,
bei dem der Client (14) Bedienelemente (32, 34, 40, 42) zur Eingabe von Navig'ationskommandos aufweist, wobei ein Übertragungsvorgang zum Nachladen von Datensätzen in den Client (14) angestoßen wird, wenn der Client (14) als Ergebnis eines Navigationsvorgangs einen nicht im Datenspeicher (30) befindlichen Datensatz anzeigen soll, und wobei im Zuge jedes solchen Übertragungsvorgangs mehrere Datensätze zum Client (14) übertragen werden.

**5.** Verfahren zur Anbindung eines Client (14) an eine Datenbank (18) über einen Server (12), wobei der Client (14) und der Server (12) über ein Kommunikationsnetz (16) Daten auszutauschen vermögen, und wobei der Client (14) einen Datenspeicher (30) zur Speicherung von Datensätzen und eine Anzeige (24) zur Darstellung von im Datenspeicher (30) vorhandenen Datensätzen aufweist, **dadurch gekennzeichnet, daß** von einem Benutzer vorgenommene Änderungen mehrerer im Datenspeicher (30) enthaltener Datensätze durch den Client (14) ohne Kommunikation mit dem Server (12) verwaltet werden, so daß bei der Darstellung zumindest der im Datenspeicher (30) enthaltenen Datensätze auf der Anzeige (24) die vorgenommenen Änderungen berücksichtigt werden.

**6.** Verfahren nach den Ansprüchen 4 und 5,
bei dem die von dem Benutzer vorgenommenen Änderungen bei der Darstellung von Datensätzen auf der Anzeige (24) auch nach der Ausführung von Navigationsvorgängen, bei denen Datensätze in den Client (14) nachgeladen wurden, weiterhin berücksichtigt werden.

**7.** Verfahren nach Anspruch 5 oder Anspruch 6,
bei dem zur Minimierung der Anzahl der Übertragungsvorgänge bei der Kommunikation vom Client (12) zum Server (14) im Zuge einer Bestätigung der von dem Benutzer vorgenommenen Änderungen Informationen, die zum Eintrag mehrerer solcher Änderungen in die Datenbank (18) dienen, in einem einzigen Übertragungsvorgang an den Server (12) übertragen werden.

**8.** Verfahren nach Anspruch 7,
bei dem die von dem Benutzer vorgenommenen Änderungen, bevor sie im Zuge der Bestätigung an den Server (12) übertragen worden sind, clientseitig ohne Kommunikation des Client (14) mit dem Server (12) widerrufbar sind.

**9.** Verfahren nach einem der Ansprüche 5 bis 8,
bei dem die möglichen Änderungen von Datensätzen durch den Benutzer die inhaltliche Änderung eines Datensatzes und/oder das Einfügen eines neuen Datensatzes und/oder das Löschen eines bestehenden Datensatzes umfassen.

**10.** Verfahren nach einem der Ansprüche 1 bis 9,
bei dem das Kommunikationsnetz (16) ein Weitverkehrsnetz und/oder ein funkbasiertes Netz und/oder ein paketorientiertes Netz und/oder ein Netz mit hoher Paketlaufzeit ist und/oder bei dem der Client (14) ein Mobilgerät ist.

**11.** Server (12), der dazu eingerichtet ist, zusammen mit einem geeigneten Client (14) ein Verfahren nach einem der Ansprüche 1 bis 10 auszuführen.

**12.** Client (14), der dazu eingerichtet ist, zusammen mit einem geeigneten Server (12) ein Verfahren nach einem der Ansprüche 1 bis 10 auszuführen.

**13.** Computerprogrammprodukt mit einer Vielzahl von Instruktionen, das dazu eingerichtet ist, zur Steuerung mindestens eines Servers (12) nach Anspruch 11 und/oder zur Steuerung mindestens eines Clients (14) nach Anspruch 12 verwendet zu werden.

Fig. 1

Fig. 5

Fig. 2

Fig. 3

Fig. 4

**Europäisches Patentamt**

# EUROPÄISCHER RECHERCHENBERICHT

Nummer der Anmeldung

EP 02 00 3058

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | BUTRICO M A ET AL: "Gold Rush: mobile transaction middleware with Java-object replication" CONFERENCE ON OBJECT-ORIENTED TECHNOLOGIES, XX, XX, 16. Juni 1997 (1997-06-16), Seiten 91-101, XP002142965 * das ganze Dokument * | 1-13 | G06F17/30 |
| X | LEE K C K ET AL: "INCREMENTAL VIEW MAINTENANCE FOR MOBILE DATABASES" KNOWLEDGE AND INFORMATION SYSTEMS, SPRINGER VERLAG,LONDON, GB, Bd. 2, Nr. 4, November 2000 (2000-11), Seiten 413-437, XP000992441 ISSN: 0219-1377 * Zusammenfassung * * Seite 414, Zeile 10 - Seite 414, Zeile 43 * * Seite 415, Zeile 1 - Seite 415, Zeile 46 * | 1-13 | |
| | | | RECHERCHIERTE SACHGEBIETE (Int.Cl.7) |
| X | WOLFSON O ET AL: "VIEW MAINTENANCE IN MOBILE COMPUTING" SIGMOD RECORD, ASSOCIATION FOR COMPUTING MACHINERY, NEW YORK, US, Bd. 24, Nr. 4, 1. Dezember 1995 (1995-12-01), Seiten 22-27, XP000627051 | 1-4 | G06F |
| A | * das ganze Dokument * | 5-13 | |

-/--

Der vorliegende Recherchenbericht wurde für alle Patentansprüche erstellt

| Recherchenort | Abschlußdatum der Recherche | Prüfer |
|---|---|---|
| DEN HAAG | 10. Februar 2003 | Abbing, R |

| | **Europäisches** | **EUROPÄISCHER RECHERCHENBERICHT** | **Nummer der Anmeldung** |
| | **Patentamt** | | EP 02 00 3058 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PITOURA E BHAGARVA B: "Maintaining consistency of data in mobile distributed environments" PROCEEDINGS OF THE INTERNATIONAL CONFERENCE ON DISTRIBUTED COMPUTING SYSTEMS. VANCOUVER, MAY 30 - JUNE 2, 1995, LOS ALAMITOS, IEEE COMP. SOC. PRESS, US, Bd. CONF. 15, 30. Mai 1995 (1995-05-30), Seiten 404-413, XP002124120 ISBN: 0-7803-2963-5 * Seite 405, Spalte 1, Zeile 50 - Seite 406, Spalte 1, Zeile 31 * ----- | 1-13 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| DEN HAAG | 10. Februar 2003 | Abbing, R |

**Europäisches**

**Patentamt**

**Nummer der Anmeldung**

EP 02 00 3058

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☒ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches**
**Patentamt**

**MANGELNDE EINHEITLICHKEIT**
**DER ERFINDUNG**
**ERGÄNZUNGSBLATT B**

Nummer der Anmeldung

EP 02 00 3058

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-4,11-13

   Verfahren und Gerät zum Speichern von nicht aktuell benötigten Datensätzen auf einem Clienten

2. Ansprüche: 5-13

   Verfahren und Gerät zum lokalen Bearbeiten von Datensätzen auf einem Clienten und zur Synchronisation der Datensätze mit einem Server